# FASCICULE DE BREVET EUROPEEN

(11) **EP 1 889 483 B1**
(45) Date de publication et mention de la délivrance du brevet: **11.08.2010**
(21) Numéro de dépôt: 06763602.7
(22) Date de dépôt: 08.06.2006
(51) Int. Cl.: H04N 7/24

(54) **PROCÉDÉ DE MARQUAGE DE COMPOSANTES D'UN SIGNAL MULTIPLEXÉ, ÉQUIPEMENT DE MARQUAGE, SIGNAL ET PROGRAMME D'ORDINATEUR CORRESPONDANTS**
VERFAHREN ZUM KENNZEICHNEN EINER MULTIPLEXIERTEN SIGNALKOMPONENTE, KENNZEICHNUNGSVORRICHTUNG, SIGNAL UND COMPUTERPROGRAMM ZUR AUSFÜHRUNG DES VERFAHRENS
METHOD FOR MARKING A MULTIPLEXED SIGNAL COMPONENTS, MARKING DEVICE, SIGNAL AND COMPUTER PROGRAM FOR CARRYING OUT SAID METHOD

(30) Priorité: 10.06.2005 FR 0505945
(43) Date de publication de la demande: 20.02.2008
(73) Titulaire: TDF, 75732 Paris Cedex 15 (FR)
(72) Inventeur: PACAUD, Jean-Claude, F-35260 Cancale (FR); LOLIVIER, Germain, F-35700 Rennes (FR)
(74) Mandataire: Guy, Marion
(86) Numéro de dépôt international: PCT/EP2006/063033
(87) Numéro de publication internationale: WO 2006/131551

(56) Documents cités:
- FR-A- 2 718 917
- US-A1- 2002 054 608

## Description

### 1. Domaine de l'invention

Le domaine de l'invention est celui de la transmission et de la diffusion d'informations numériques. Plus précisément, l'invention concerne une technique de marquage de composantes d'un signal multiplexé, notamment, mais non exclusivement, lorsque ce signal véhicule des services audiovisuels et multimédia.

Dans un mode de réalisation préférentiel, mais non exclusif, de l'invention, cette technique s'inscrit dans le contexte de la norme ISO/IEC 13818-1 relative aux multiplex MPEG-TS ("Motion Picture Expert Group-Transport Stream").

### 2. Solutions de l'art antérieur

Il existe à ce jour plusieurs techniques de marquage de signaux, ou de leurs différentes composantes. On notera que, par composante d'un signal, on entend ici, et dans toute la suite de ce document, un élément de ce signal lorsqu'il est composite (par exemple, la partie audio, ou la partie vidéo d'un signal multimédia).

On rappelle que, dans le cadre d'un signal multiplexé chargé de transporter un ensemble de services comprenant chacun une ou plusieurs composantes, l'objectif du marquage est d'associer, à chaque composante, en amont de la fonction de diffusion du signal, un identifiant unique, permettant de s'assurer de l'affectation correcte de la composante au service qui la référence.

Parmi ces différentes techniques de marquage, on connaît notamment les approches dites de "watermarking", comme décrit dans le document «Digital Watermarking for Compressed Video » (F. Hartung, J. K. Su, B. Girod, Multimedia and Security Workshop at ACM Multimedia '98. Bristol, U.K., pp 77-79, Septembre 1998), encore appelées techniques de tatouage, qui permettent de marquer un signal dès sa production, et de le suivre ensuite tout au long des chaînes de production, de diffusion, de reproduction ou encore de stockage. Ces techniques de "watermarking" s'appliquent aussi bien aux signaux de nature analogique qu'aux signaux numériques. Elles consistent à insérer une marque dans le signal, qui soit imperceptible pour l'oeil ou l'oreille humaine. Par exemple, pour un signal représentatif d'une image, une telle marque peut consister en une modification imperceptible de la colorimétrie de certains pixels de l'image.

Dans le domaine des signaux audiovisuels analogiques, le marquage des différentes composantes d'un signal est réalisé au moyen d'un identifiant appelé IDS pour Identification De Source. Ainsi, pour les signaux télévisuels analogiques, deux composantes son et vidéo sont véhiculées dans un même canal et l'identifiant IDS marquant les composantes est transmis lors de la "suppression trames", i.e. pendant l'intervalle de temps pendant lequel le spot de balayage de l'écran cathodique remonte du bas vers le haut de l'écran.

### 3. Inconvénients de l'art antérieur

Ces diverses techniques présentent cependant divers inconvénients.

Ainsi, les techniques de "watermarking", bien que très puissantes, sont complexes et coûteuse. En effet, elles doivent répondre à des fonctions de DRM ("Digital Right Management"), c'est-à-dire être indétectables et robustes, i.e. résistantes à tout type de transformation (rotation, réduction, etc.) et d'altération du signal.

La technique de marquage connue pour les signaux audiovisuels analogiques présente quant à elle comme inconvénient d'être totalement inadaptée et inadaptable aux signaux numériques. En effet, pour les applications de télévision numérique par exemple, seules les lignes utiles sont codées et transmises.

### 4. Objectifs de l'invention

L'invention a notamment pour objectif de pallier ces inconvénients de l'art antérieur.

Plus précisément, un objectif de l'invention est de fournir une technique de marquage d'une ou plusieurs composantes d'un signal numérique multiplexé, qui présente une efficacité de marquage similaire à celle connue pour les signaux audiovisuels analogiques, mais qui fasse appel à des méthodes moins complexes et moins coûteuses que les techniques de Watermarking.

Un autre objectif de l'invention est de proposer une telle technique qui soit particulièrement bien adaptée aux signaux véhiculés le long des chaînes de diffusion DVB ("Digital Video Broadcasting"), qu'il s'agisse de chaînes DVB-S ("DVB-Satellite"), DVB-T ("DVB-Terrestrial"), DVB-C ("DVB-Cable") ou encore DVB-H ("DVB-Handheld").

L'invention a encore pour objectif de fournir un tel marquage qui ne soit altéré, ni par des opérations de remultiplexage des services véhiculés dans le signal multiplexé, et/ou de leurs composantes, ni par des opérations d'embrouillage et/ou de désembrouillage du signal.

L'invention a également pour objectif de proposer une telle technique de marquage qui soit simple et peu coûteuse à mettre en oeuvre, tant du côté de l'insertion du marquage que du côté de sa détection dans un signal reçu.

L'invention a aussi pour objectif de fournir une telle technique de marquage qui soit indépendante du contenu véhiculé par le signal multiplexé, et qui soit donc applicable aussi bien à des composantes vidéo, que des composantes audio ou des composantes de données (télétexte, sous-titrage, IP etc. dans le cas d'un signal audiovisuel).

L'invention a enfin pour objectif de proposer une telle technique qui soit compatible avec les normes ISO/IEC 13818-1 et ETSI EN 300 468, et avec le mode de fonctionnement des équipements qui les mettent en oeuvre. Plus précisément, un objectif de l'invention est de fournir un tel marquage qui soit invisible pour tous les équipements traversés par le signal le long de sa chaîne de diffusion, y compris par le récepteur.

### 5. Exposé de l'invention

Ces objectifs, ainsi que d'autres qui apparaîtront par la suite, sont atteints à l'aide d'un procédé de marquage d'au moins une composante d'un signal multiplexé organisé en paquets de transport successifs et véhiculant une pluralité de services comprenant chacun au moins une composante, chacune desdites composantes étant identifiée au niveau desdits paquets de transport par un identifiant de paquet, chacun desdits paquets de transport comprenant un en-tête et un champ de données.

L'invention est définie par les revendications 1, 9 et 10.

Selon l'invention, un tel procédé de marquage comprend une étape d'insertion dans ledit signal multiplexé d'au moins un paquet de transport particulier, appelé paquet de marquage, comprenant uniquement un champ d'adaptation, dans ledit en-tête dudit paquet, et ledit paquet de marquage présente le même identifiant de paquet que ladite composante à marquer et transporte, dans ledit champ d'adaptation, au moins une information de marquage de ladite composante.

Ainsi, l'invention repose sur une approche tout à fait nouvelle et inventive du marquage de composantes d'un signal numérique multiplexé. En effet, le marquage de l'invention s'effectue au niveau du transport des composantes ("Transport Stream"), ce qui permet, d'une part, de réaliser un marquage indépendant du type de composante (vidéo, audio ou donnée), et d'autre part, de suivre la composante marquée au travers des différents traitements subis par le signal multiplexé tout au long de sa chaîne de diffusion ou de transmission

Une telle technique de marquage s'avère particulièrement simple et peu coûteuse à mettre en oeuvre. En outre, elle est particulièrement résistante à d'éventuelles opérations d'embrouillage/désembrouillage du signal multiplexé. Enfin, le paquet de marquage inséré selon l'invention ne vient pas perturber le fonctionnement d'un terminal de réception du signal, qui ne l'interprète pas.

Avantageusement, ledit paquet de marquage remplace un paquet de bourrage dudit signal multiplexé. Son insertion ne perturbe ainsi pas le débit de transmission du service.

Préférentiellement, ladite information de marquage de ladite composante est renseignée dans ledit champ d'adaptation dudit paquet de marquage par un descripteur privé.

Selon une caractéristique avantageuse de l'invention, ledit signal multiplexé est de type MPEG-TS.

De manière préférentielle, ladite étape d'insertion est mise en oeuvre préalablement à une étape de diffusion dudit signal multiplexé vers au moins un terminal de réception. On réalise ainsi le marquage au plus près de la source, avant que le signal n'ait pu être modifié ou perturbé par l'un quelconque des équipements de sa chaîne de transmission ou de diffusion.

Selon une variante avantageuse de l'invention, on insère au moins deux paquets de marquage associés chacun à une composante distincte dans ledit signal multiplexé, de façon à réaliser le marquage d'au moins deux composantes. Par exemple, on peut marquer les composantes audio et vidéo d'un même service ou programme, ou marquer les deux composantes audio de deux services distincts véhiculés dans le même multiplex.

Préférentiellement, un service comprenant au moins deux composantes, on ne réalise le marquage, par insertion d'un paquet de marquage dans ledit signal multiplexé, que d'une desdites composantes dudit service. Le marquage d'une seule composante d'un service peut en effet s'avérer suffisant, et être moins coûteux en ressources.

Selon une caractéristique avantageuse de l'invention, ladite étape d'insertion d'un paquet de marquage dans ledit signal multiplexé est mise en oeuvre à intervalles de temps réguliers de durée sensiblement égale à 30 s. Dans le cas de signaux télévisuels par exemple, une telle fréquence de marquage est suffisante pour détecter d'éventuelles transitions entre les émissions d'un même service ou programme sans perturber la qualité perçue par le téléspectateur.

L'invention concerne aussi un signal multiplexé organisé en paquets de transport successifs et véhiculant une pluralité de services comprenant chacun au moins une composante, chacune desdites composantes étant identifiée au niveau desdits paquets de transport par un identifiant de paquet, chacun desdits paquets de transport comprenant un en-tête et un champ de données.

Selon l'invention, un tel signal comprend également au moins un paquet de transport particulier, appelé paquet de marquage, comprenant uniquement un champ d'adaptation, dans ledit en-tête dudit paquet, et ledit paquet de marquage présente le même identifiant de paquet qu'une desdites composantes dudit signal, et transporte, dans ledit champ d'adaptation, au moins une information de marquage de ladite composante

L'invention concerne encore un équipement de marquage d'au moins une composante d'un signal multiplexé organisé en paquets de transport successifs et véhiculant une pluralité de services comprenant chacun au moins une composante, chacune desdites composantes étant identifiée au niveau desdits paquets de transport par un identifiant de paquet, chacun desdits paquets de transport comprenant un en-tête et un champ de données. Un tel équipement comprend des moyens d'insertion dans ledit signal multiplexé d'au moins un paquet de transport particulier, appelé paquet de marquage, comprenant uniquement un champ d'adaptation, dans ledit en-tête dudit paquet, des moyens d'affectation audit paquet de marquage du même identifiant de paquet que ladite composante à marquer et des moyens d'inscription, dans ledit champ d'adaptation, d'au moins une information de marquage de ladite composante.

L'invention concerne également un produit programme d'ordinateur téléchargeable depuis un réseau de communication et/ou stocké sur un support lisible par ordinateur et/ou exécutable par un microprocesseur, comprenant des instructions de code de programme pour la mise en oeuvre des étapes du procédé de marquage décrit précédemment.

L'invention concerne enfin un procédé de réception d'un signal multiplexé organisé en paquets de transport successifs et véhiculant une pluralité de services comprenant chacun au moins une composante, chacune desdites composantes étant identifiée au niveau desdits paquets de transport par un identifiant de paquet, au moins une desdites composantes dudit signal ayant été marquée selon le procédé de marquage décrit précédemment. Un tel procédé de réception comprend :
- une étape de recherche d'au moins un paquet de marquage dans ledit signal multiplexé reçu ;
- en cas de détection d'au moins un paquet de marquage :
- une étape d'extraction d'au moins une information de marquage dudit paquet détecté ;
- une étape d'association de ladite au moins une information de marquage à une desdites composantes dudit signal multiplexé, appelée composante marquée, en fonction dudit identifiant de paquet dudit paquet de marquage ;
- une étape de vérification, en fonction de ladite information de marquage, de l'affectation correcte de ladite composante marquée à l'un desdits services ;
- en l'absence de détection d'au moins un paquet de marquage après un intervalle de temps prédéterminé, une étape d'émission d'une alerte d'absence de marquage.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un multiplex DVB auquel peut s'appliquer la technique de marquage de la présente invention ;
- la figure 2 illustre la structure d'un paquet de marquage susceptible d'être inséré dans le multiplex de la figure 1 ;
- la figure 3 décrit un exemple de réalisation matérielle d'un dispositif de marquage de l'invention ;
- la figure 4 présente un synoptique fonctionnel simplifié de l'équipement de marquage de la figure 3 ;
- la figure 5 présente un organigramme simplifié des étapes mises en oeuvre en réception du signal multiplexé marqué, pour détecter et exploiter le marquage des composantes.

### 7. Description d'un mode de réalisation de l'invention

Le principe général de l'invention repose sur l'insertion, au niveau transport des paquets de données d'un signal multiplexé, d'un paquet de transport particulier, appelé paquet de marquage, permettant de marquer une composante du signal Un tel paquet de marquage ne comprend qu'un champ d'adaptation, dans son en-tête, et porte le même identifiant de paquet, ou PID, que la composante qu'il marque.

On s'attache ci-après à décrire, à simple titre d'exemple non restrictif, un mode de réalisation particulier de l'invention dans le cas d'un signal multiplexé de type MPEG-TS destiné à une application de télévision numérique terrestre de type DVB-T.

Un multiplex DVB est chargé de transporter un ensemble de services comprenant chacun une ou plusieurs composantes (composante audio, composante vidéo, composante de données telles que sous-titrage, télétexte, etc.). Un service, encore parfois appelé programme, peut correspondre par exemple à l'ensemble des émissions diffusées dans le temps par une chaîne télévisée telle que TF1 ou France 2 (marques déposées) en France.

L'ensemble des services du multiplex DVB est décrit par une signalisation, qui est elle-même multiplexée aux services. Chacune des composantes du signal est multiplexée aux autres par l'intermédiaire d'une mise en paquets de taille fixe, égale à 188 octets. Chacune des composantes multiplexées est identifiée au niveau des paquets de transport par un identifiant de paquet appelé PID. D'autres identifiants sont également définis aux niveaux supérieurs de la structure du signal.

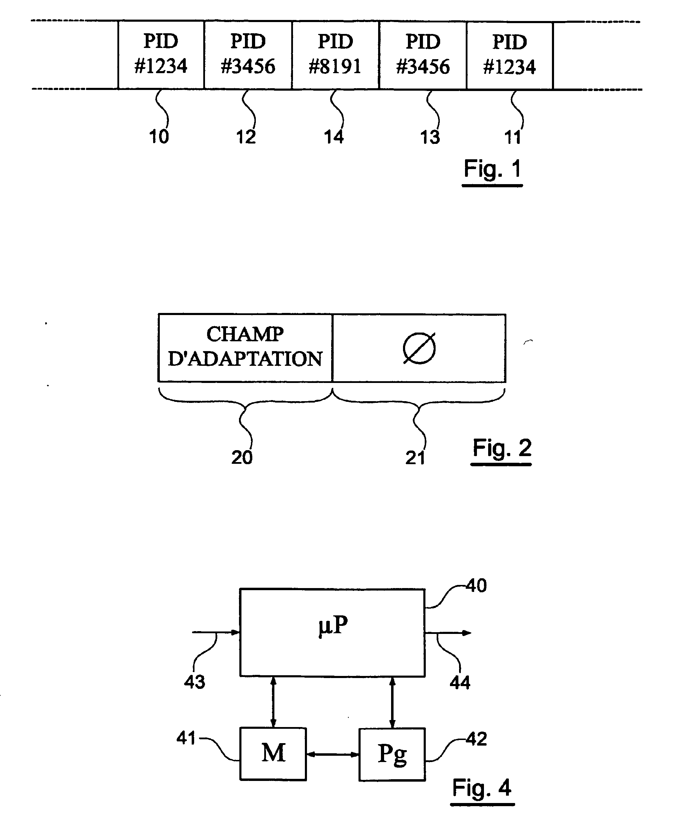

On présente, en relation avec la figure 1, un exemple d'un tel multiplex DVB auquel peut s'appliquer la présente invention. On considère un exemple très simplifié d'un multiplex comprenant uniquement deux services, associés chacun à une unique composante. Une première composante est transportée sous la forme des paquets de transport référencés 10 et 11, portant l'identifiant PID #1234 ; une deuxième composante est transportée par les paquets référencés 12 et 13, qui portent l'identifiant PID #3456.

Le multiplex DVB de la figure 1 comprend également, entre les paquets de transport référencés 12 et 13, un paquet de bourrage portant l'identifiant de paquet PID #8191, conformément à la norme ISO 13818-1. Un tel paquet de bourrage 14 est un paquet ne transportant pas d'information utile, qui peut astucieusement être remplacé, dans le cadre de l'invention, par un paquet de marquage, destiné par exemple à marquer la deuxième composante d'identifiant #3456. Dans ce cas, on insère, à la place du paquet de bourrage 14, un paquet de marquage dont la structure est décrite ci-après en relation avec la figure 2, et qui va porter le même identifiant de paquet que la composante dont il assure le marquage, soit le PID #3456.

On peut bien sûr également insérer un paquet de marquage indépendamment de tout paquet de bourrage, par exemple entre les paquets de transport référencés 10 et 12, pour marquer l'une des deux composantes du multiplex. Dans cette variante de réalisation, l'insertion d'un paquet de marquage supplémentaire modifie le débit du multiplex, et il est donc nécessaire de recalculer l'ensemble des champs PCR (pour "Program Clock Reference") contenant l'horloge système associée aux composantes vidéo ou audio pour s'adapter au nouveau débit

L'insertion d'un paquet de marquage à la place d'un paquet de bourrage ne modifie pas le débit du multiplex, et constitue donc une variante de réalisation plus simple et moins coûteuse.

Le multiplex DVB de la figure 1 subit, après sa production, différentes opérations de traitement de signal numérique, tout au long de la chaîne de diffusion/transmission, qui affectent les caractéristiques des services et de leurs composantes. Parmi ces opérations, on peut citer les opérations de remultiplexage, qui consistent à réaffecter aux paquets de transports du multiplex de nouveaux identifiants de paquets PID. De même, des actions de substitution de composantes peuvent être effectuées, lors d'un décrochage local par exemple, lors duquel des composantes locales (par exemple un programme télévisé de couverture régionale sur France 3 (marque déposée)) se substituent à des composantes nationales (par exemple un programme télévisé de couverture nationale sur France 3). Dans un tel cas de substitution de composantes, les paquets de transport des composantes affectées conservent bien sûr leur PID, qui demeure inchangé.

Le marquage des composantes du multiplex est donc nécessaire pour s'assurer de l'affectation correcte des composantes aux services diffusés depuis les différentes têtes émettrices du réseau de diffusion DVB-T.

On présente ci-après plus en détail, en relation avec la figure 2, la structure d'un paquet de marquage selon l'invention. Un tel paquet de marquage est un paquet de transport (ou paquet TS) particulier, et présente donc une structure similaire, à savoir un en-tête (ou "header") 20 et un champ de données utiles (ou "payload") 21. Cependant, le champ de données utiles 21 d'un paquet de marquage est vide, et l'en-tête 20 contient quant à lui un champ particulier, appelé champ d'adaptation (ou "adaptation field"), dont le contenu sera décrit plus en détail ci-après. Ce paquet de marquage est inséré dans le signal multiplexé sur le même identifiant PID que celui de la composante à marquer. Il présente l'avantage de n'être ni interprété par le décodeur, ni embrouillé et désembrouillé. Il présente aussi l'avantage d'être indépendant du contenu à marquer et de ne pas être modifié par des opérations de remultiplexage au niveau service.

En outre, ce paquet de marquage ne contenant qu'un champ d'adaptation, et conformément aux prescriptions de la norme ISO 13 818 - 1, il ne modifie pas l'indice de continuité des autres paquets de même PID, ce qui s'avère particulièrement avantageux. En d'autres termes, l'indice de continuité du paquet précédent est maintenu sur ce paquet de marquage. On rappelle que l'indice de continuité associé aux différents paquets de transport consiste à numéroter de manière continue entre 0 et 15, et en boucle, les paquets successifs de même PID du multiplex, afin de vérifier, en réception, qu'ils se succèdent de façon correcte.

Le marquage est renseigné dans le champ d'adaptation du paquet de marquage par un descripteur privé appelé *component_identifier_descriptor.* L'origine de la composante marquée peut quant à elle être identifiée par un descripteur privé optionnel appelé *source_provider_descriptor.* Ces deux descripteurs privés sont introduits par l'insertion préalable d'un descripteur appelé *private_data_specifier_descriptor* tel que défini dans la norme ETSI EN 300 468. La présence de ce descripteur est obligatoire pour renseigner le ou les descripteur(s) privé(s) qui sui(ven)t, et signaler l'identité de l'entité qui le(s) gère (par exemple, en France, TDF ; ainsi, par exemple, le champ *data_specifier* présent dans le descripteur *private_data_specifer_descriptor* est réservé à TDF, et enregistré dans le document ETSI ETR 162).

Le tableau ci-dessous indique la syntaxe du descripteur *private_data_specifier_descriptor,* spécifié dans le document EN 300 468.

| Syntaxe | | Nb de bits | Valeur |
|---|---|---|---|
| Private_stream_indicator() { | | | |
| | Tag | 8 | 0x5F |
| | Descriptor length | 8 | 0x04 |
| | Specifier | 32 | |
| } | | | |

Le champ *Specifier* alloué à TDF porte la valeur 0x0000001A et est référencé dans le document ETSI TR 101 162.

Le descripteur privé *Component_identifier_descriptor* présente quant à lui la syntaxe suivante :

| Syntaxe | Nombre de bits | Valeur |
|---|---|---|
| Component_identifier_descriptor() { | | |
| Tag | 8 | 0x82 |
| Descriptor_length | 8 | 0x05 |
| Stream_type | 8 | |
| Component_identifier | 32 | |
| } | | |

L'élément *Stream_type* renseigne sur le type de la composante marquée par le paquet de marquage considéré. Le tableau ci-dessous indique le type de la composante considérée, en fonction de la valeur du champ *Stream_type,* conformément à la norme ISO/IEC 13818-1.

| **Valeur** | **Description** |
|---|---|
| 0x00 | Réservé à l'UIT-T \| ISO/CEI |
| 0x01 | Vidéo ISO/CEI 11172-2 |
| 0x02 | Vidéo Rec. UIT-T H.262 \| ISO/CEI 13818-2 ou flux vidéo à paramètres contraints ISO/CEI 11172-2 |
| 0x03 | Audio ISO/CEI 11172-3 |
| 0x04 | Audio ISO/CEI 13818-3 |
| 0x05 | Private_sections Rec. UIT-T H.222.0 \| ISO/CEI 13818-1 |
| 0x06 | Paquets PES contenant des données privées Rec. UIT-T H.222.0 \| ISO/CEI 13818-1 |
| 0x07 | MHEG ISO/CEI 13522 |
| 0x08 | Annexe A DSM-CC Rec. UTT-T H.222.0 \| ISO/CEI 13818-1 |
| 0x09 | Rec. UIT-T H.222.1 |
| 0x0A | ISO/CEI 13818-6 type A |
| 0x0B | ISO/CEI 13818-6 type B |
| 0x0C | ISO/CEI 13818-6 type C |
| 0x0D | ISO/CEI 13818-6 type D |
| 0x0E | Auxiliaire Rec. UIT-T H.222.0 \| ISO/CEI 13818-1 |
| 0x0F | Audio ISO/CEI 13818-7 avec syntaxe de transport ADTS |
| 0x10 | Visuel ISO/CEI 14496-2 |
| 0x11 | Audio ISO/CEI 14496-3 avec syntaxe de transport LATM telle que définie dans l'Amendement 1 de l'ISO/CEI 14496-3 |
| 0x12 | Flux de paquets SL ISO/CEI 14496-1 ou flux FlexMux acheminé dans des paquets PES |
| 0x13 | Flux de paquets SL ISO/CEI 14496-1 ou flux FlexMux acheminé dans ISO/CEI 14496 sections |
| 0x14 | Protocole de téléchargement synchronisé ISO/CEI 13818-6 |
| 0x15 | Métadonnées acheminées dans des paquets PES |
| 0x16 | Métadonnées acheminées dans metadata_sections |
| 0x17 | Métadonnées acheminées dans un carrousel de données ISO/CEI 13818-6 |
| 0x18 | Métadonnées acheminées dans un carrousel d'objets ISO/CEI 13818-6 |
| 0x19 | Métadonnées acheminées dans le protocole de téléchargement synchronisé ISO/CEI 13818-6 |
| 0x1A | Flux IPMP (défini dans l'ISO/CEI 13818-11, IPMP MPEG-2) |
| 0x1B | Flux vidéo AVC tel que défini dans la Rec. UIT-T H.264 \| ISO/CEI 14496-10 |
| 0x1C- | 0x7E Réservés à la Rec. UIT-T H.222.0 \| ISO/CEI 13818-1 |
| 0x7F | Flux IPMP |
| 0x80- | 0xFF Réservés à l'utilisateur |

Enfin, l'élément *Component_identifier* désigne la référence attribuée à la composante. Le triplet *Specfier?Stream_tpe*/*Component_identifier* est unique.

Le tableau ci-dessous indique la syntaxe du descripteur privé optionnel *source_provider_descriptor,* qui indique en mode texte l'origine de la composante marquée. Ce descripteur permet d'identifier plus facilement, par son nom (Champ Char de la syntaxe), le fournisseur de la composante.

| Syntaxe | Nombre de bits | Valeur |
|---|---|---|
| Source_provider_descriptor() { | | |
| Tag | 8 | 0x83 |
| Reserved | 2 | Chaque bit prend la valeur 1 |
| Descriptor_length | 6 | |
| Char | | |
| } | | |

On présente ci-après la structure du champ d'adaptation contenu dans l'en-tête 20 du paquet de marquage de l'invention. Le champ *adaptation_field_control* prend la valeur 0x2.

| Syntaxe | Nb de bits | Valeur | Commentaires |
|---|---|---|---|
| Adaptation_field(){ | | | |
| Adaptafion_field_lengm | 8 | 0xB7 | |
| If (adaptation_field_length >0) { | | | |
| Discontinuity_indicator | 1 | 0 | |
| Random_access_indicator | 1 | 0 | |
| Elementary_stream_prionty-indicator | 1 | 0 | |
| PCR_flag | 1 | 0 | |
| OPCR_flag | 1 | 0 | |
| Splicing_point_flag | 1 | 0 | |
| Transport_private_data_flag | 1 | 1 | |
| Adaptation_field_extension_flag | 1 | 0 | |
| Transport_private_data_length | 8 | 0x0D | |
| For (i=0 ; i<transport_private_data_length ; i++){ | | | |
| Private_data_specifier() | | | insertion du |
| Component_idenfifier_descriptor() | | | descripteur de |
| Source_pfovider_descriptor() | | | marquage |
| } | | | |
| } | | | |
| for (i=0 ; i<N ; i++){ | | | |
| stuffing_byte | 8 | 0xFF | bourrage |
| } | | | |
| } | | | |

La fréquence d'insertion des paquets de marquage doit permettre un compromis entre le débit consommé pour le marquage et le temps d'acquisition de l'information de marquage. Cette fréquence d'insertion peut être très faible, de sorte que la puissance de calcul demandée pour détecter et analyser le marquage est négligeable, ainsi que le débit correspondant.

Par exemple, on choisit dans un mode de réalisation préférentiel de l'invention d'insérer un paquet de marquage toutes les 30 secondes, ce qui constitue un débit négligeable, de l'ordre de 0,05 kbits/s.

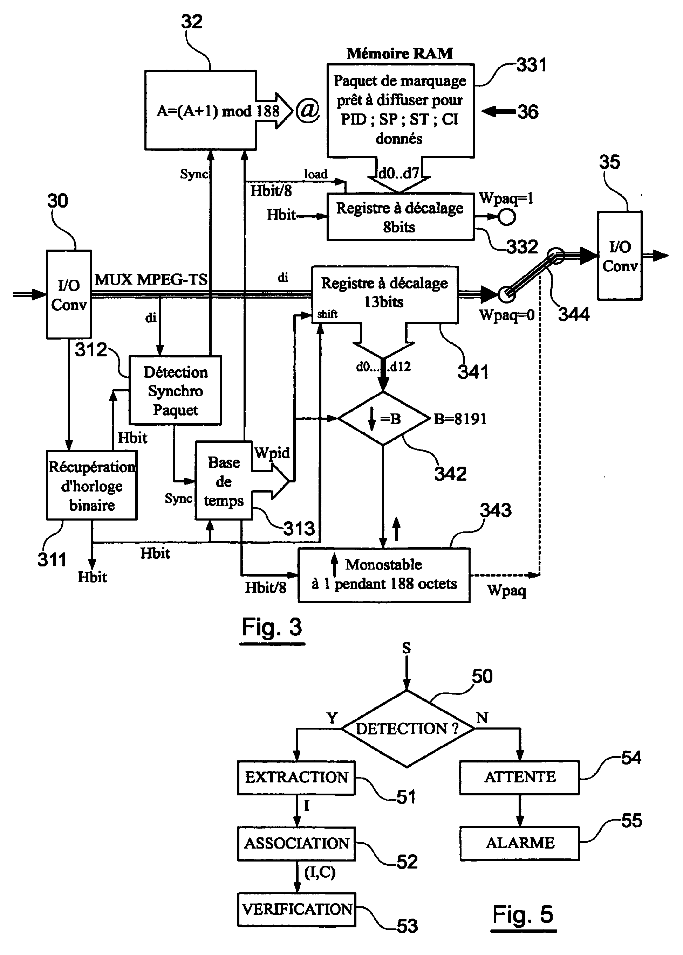

La figure 3 illustre l'architecture détaillée d'un équipement de marquage réalisant l'insertion, dans un multiplex, de paquets de marquage des composantes. Un tel équipement de marquage est de préférence disposé au plus près de la source du signal, de façon à ce que le marquage soit inséré avant que les composantes du service aient pu subir une quelconque altération ou modification, au travers de la chaîne de traitement. Ainsi, l'équipement de marquage doit intervenir de préférence dès la prise en charge des signaux numériques, ou après le codage des différentes composantes.

Le signal à marquer, qui est par exemple un multiplex MPEG-TS, entre dans l'équipement de marquage par le convertisseur d'entrée/sortie 30.

L'équipement de marquage est principalement constitué de trois sous-ensembles :
- un premier sous-ensemble comprenant les éléments référencés 311, 312 et 313, qui gère la base de temps de fonctionnement de l'équipement et est en charge de la génération des signaux de commande de l'ensemble des autres éléments de l'équipement ;
- un deuxième sous-ensemble comprenant la mémoire RAM 331 et un registre à décalage à 8 bits 332, qui est en charge de la construction des paquets de marquage ;
- un troisième sous-ensemble comprenant un registre à décalage à 13 bits 341, un module de recherche des paquets de bourrage 342, un monostable à 1 pendant 188 octets 343 et un commutateur 344, qui prend la décision d'insérer le paquet de marquage dans le multiplex MPEG-TS.

Plus précisément, un module de récupération d'horloge binaire 311 récupère une horloge binaire Hbit à partir du multiplex MPEG-TS entrant dans le convertisseur d'entrée/sortie 30, et la fournit au module de détection de la synchronisation des paquets 312 et à la base de temps 313. Une horloge Hbit/8, générée par la base de temps 313 à partir de l'horloge binaire Hbit, alimente également le monostable 343 et le module de gestion de l'indice de continuité 32.

Un ensemble d'informations comprenant l'indice de continuité délivré par le module de gestion de cet indice 32 et un ensemble de paramètres 36 entrés dans l'équipement de marquage alimentent la mémoire RAM 331. Ces paramètres 36 comprennent par exemple le PID d'une composante à marquer (par exemple PID=100), le *Private_Data_Specifier* SP (par exemple SP=0x0000001A), le *Stream_Type* ST permettant d'identifier la nature de la composante à marquer (par exemple ST=0x02 pour une composante vidéo) et l'identifiant de la composante à marquer *Component_Identifier* CI (par exemple CI=1).

Les données de la mémoire RAM 331 sont structurées sous la forme de paquets de marquage chargés dans le registre à décalage à 8 bits d0 à d7 332.

En parallèle, le multiplex MPEG-TS alimente le registre à décalage à 13 bits 341. Un tel décalage de 5 bits par rapport à la taille des paquets (8 bits) a pour objectif de permettre de détecter le PID du paquet traité. Ce PID est scruté par le comparateur référencé 342, qui recherche les paquets de bourrage de PID B=8191, afin de les remplacer par des paquets de marquage.

Le commutateur 344 est commandé par le signal Wpaq délivré par le monostable 343, qui le fait basculer sur la lecture de l'un ou l'autre des registres référencés 332 (Wpaq=1) et 341 (Wpaq=0), selon que le paquet du flux MPEG-TS est ou non un paquet de bourrage et doit donc ou non être remplacé par un paquet de marquage préparé dans la mémoire RAM 331.

On notera qu'on a, pour les signaux Wpid et Wpaq, Wpid=1 sur 13 bits pendant PID et W_{paq}=1 pendant un paquet de transport TS de 188 octets.

Après insertion du paquet de marquage, le multiplex MPEG-TS ressort de l'équipement de marquage par le convertisseur d'entrée/sortie 35.

La figure 3 et la description ci-dessus illustrent le cas particulier du marquage d'une seule composante du multiplex MPEG-TS. On pourrait bien sûr également marquer simultanément plusieurs composantes du signal, en renseignant les différentes composantes à marquer dans les informations 36 d'alimentation de la mémoire RAM 331, et en réalisant une gestion de différentes zones d'adressage, affectées chacune à une composante à marquer, de cette mémoire 331.

Par souci de simplification, on peut par exemple choisir de ne marquer que l'une des composantes (par exemple la composante audio) d'un service à composantes multiples.

De même, dans le cas de la substitution de composantes décrite ci-dessus dans le contexte de décrochages régionaux des programmes télévisés, on peut choisir de n'utiliser qu'un marqueur pour les composantes nationale ou régionale. L'absence de marquage, lorsqu'elle est détectée, permet alors d'identifier la source (par exemple, une source régionale si l'on a choisi de ne marquer que les composantes nationales).

On présente désormais succinctement, en relation avec la figure 4, la structure simplifiée d'un équipement de marquage de l'invention, qui comprend une mémoire M 41, et une unité de traitement 40 équipée d'un processeur µP, qui est piloté par le programme d'ordinateur Pg 42.

L'unité de traitement 40 reçoit en entrée un multiplex DVB 43, transportant un ensemble de services comprenant chacun une ou plusieurs composantes. Le multiplex 43 est organisé en paquets de transport successifs présentant un identifiant de paquet ou PID caractéristique de la composante qu'ils véhiculent. A partir du multiplex 43, le microprocesseur µP construit, selon les instructions du programme Pg 42, un signal multiplexé dans lequel une ou plusieurs composantes sont marquées. Pour ce faire, le microprocesseur µP insère dans le multiplex 43 un ou plusieurs paquets de marquage du type de ceux de la figure 2, portant le même identifiant de paquet PID que la composante qu'ils marquent.

En sortie de l'unité de traitement 40, on obtient un signal multiplexé 44 dont les composantes sont marquées.

La figure 5 présente, sous forme d'organigramme, les différentes étapes mises en oeuvre en réception du signal multiplexé marqué, pour détecter et utiliser les paquets de marquage des composantes.

Le signal S, dont une ou plusieurs composantes ont été marquées par l'équipement de marquage des figures 3 et 4, et qui a été transmis ou diffusé jusqu'à un récepteur MPEG-DVB, entre dans le module de détection du marquage, qui est chargé de vérifier l'affectation correcte de chaque composante du multiplex S au service qui la référence.

Le module de détection scrute 50, pour un ou plusieurs PID(s) donné(s), la présence éventuelle de paquets de marquage portant cet ou ces identifiant(s).

En cas de détection positive, il extrait alors 51 les informations de marquage I contenues dans le champ d'adaptation du paquet de marquage qu'il a pu détecter, et les associe 52 à une composante C du multiplex, en se basant sur l'identifiant PID du paquet de marquage détecté, qui lui indique quelle est la composante C marquée. Cette association 52 tient également compte d'éventuelles informations de marquage précédentes, stockées dans une mémoire du module, pour détecter une éventuelle transition de marquage.

L'équipement peut alors vérifier 53 que la composante marquée C a bien été affectée au service qui la référence, et qui est spécifié dans l'information de marquage I du champ d'adaptation du paquet de marquage détecté (plus précisément, dans le champ *Component_identifier* du descripteur privé *Component_identifier_descriptor*).

Si en revanche, en scrutant 50 le signal S reçu à la recherche d'éventuels paquets de marquage associés à un PID particulier, le module de détection ne détecte aucun paquet de marquage, il se place en phase d'attente 54 au cours de laquelle il continue à scruter le signal S. Au-delà d'un temps maximum prédéterminé ("time out") au bout duquel aucun paquet de marquage n'a pu être détecté, le module émet une alarme 55, indiquant un potentiel problème de marquage ou de mauvaise attribution des composantes au service.

## Revendications

1. Procédé de marquage d'au moins une composante d'un signal multiplexé organisé en paquets de transport (10-14) successifs et véhiculant une pluralité de services comprenant chacun au moins une composante,
chacune desdites composantes étant identifiée au niveau desdits paquets de transport (10-14) par un identifiant de paquet (PID),
chacun desdits paquets de transport comprenant un en-tête (20) et un champ de données (21),
**caractérisé en ce qu'**il comprend une étape d'insertion dans ledit signal multiplexé d'au moins un paquet de transport particulier, dont le champ de données (21) est vide, appelé paquet de marquage, comprenant un champ particulier, appelé champ d'adaptation, dans ledit en-tête (20) dudit paquet,
et **en ce que** ledit paquet de marquage présente le même identifiant (PID) de paquet que ladite composante à marquer et transporte, dans ledit champ d'adaptation, au moins une information de marquage de ladite composante.

2. Procédé de marquage selon la revendication 1, **caractérisé en ce que** ledit paquet de marquage remplace un paquet de bourrage (14) dudit signal multiplexé.

3. Procédé de marquage selon l'une quelconque des revendications 1 et 2, **caractérisé en ce que** ladite information de marquage de ladite composante est renseignée dans ledit champ d'adaptation dudit paquet de marquage par un descripteur privé.

4. Procédé de marquage selon l'une quelconque des revendications 1 à 3, **caractérisé en ce que** ledit signal multiplexé est de type MPEG-TS.

5. Procédé de marquage selon l'une quelconque des revendications 1 à 4, **caractérisé en ce que** ladite étape d'insertion est mise en oeuvre préalablement à une étape de diffusion dudit signal multiplexé vers au moins un terminal de réception.

6. Procédé de marquage selon l'une quelconque des revendications 1 à 5, **caractérisé en ce qu'**on insère au moins deux paquets de marquage associés chacun à une composante distincte dans ledit signal multiplexé, de façon à réaliser le marquage d'au moins deux composantes.

7. Procédé de marquage selon l'une quelconque des revendications 1 à 6, **caractérisé en ce que**, un service comprenant au moins deux composantes, on ne réalise le marquage, par insertion d'un paquet de marquage dans ledit signal multiplexé, que d'une desdites composantes dudit service.

8. Procédé de marquage selon l'une quelconque des revendications 1 à 7, **caractérisé en ce que** ladite étape d'insertion d'un paquet de marquage dans ledit signal multiplexé est mise en oeuvre à intervalles de temps réguliers de durée sensiblement égale à 30 s.

9. Signal multiplexé organisé en paquets de transport (10-14) successifs et véhiculant une pluralité de services comprenant chacun au moins une composante, chacune desdites composantes étant identifiée au niveau desdits paquets de transport (10-14) par un identifiant de paquet (PID),
chacun desdits paquets de transport comprenant un en-tête (20) et un champ de données (21),
**caractérisé en ce qu'**il comprend également au moins un paquet de transport particulier, dont le champ de données (21) est vide, appelé paquet de marquage, comprenant un champ particulier, appelé champ d'adaptation, dans ledit en-tête (20) dudit paquet,
et **en ce que** ledit paquet de marquage présente le même identifiant de paquet (PID) qu'une desdites composantes dudit signal, et transporte, dans ledit champ d'adaptation, au moins une information de marquage de ladite composante

10. Equipement de marquage d'au moins une composante d'un signal multiplexé organisé en paquets de transport (10-14) successifs et véhiculant une pluralité de services comprenant chacun au moins une composante,
chacune desdites composantes étant identifiée au niveau desdits paquets de transport par un identifiant de paquet (PID),
chacun desdits paquets de transport comprenant un en-tête (20) et un champ de données (21),
**caractérisé en ce qu'**il comprend des moyens d'insertion (344) dans ledit signal multiplexé d'au moins un paquet de transport particulier, dont le champ de données (21) est vide, appelé paquet de marquage, comprenant un champ particulier, appelé champ d'adaptation, dans ledit en-tête (20) dudit paquet, des moyens d'affectation (331, 36) audit paquet de marquage du même identifiant de paquet que ladite composante à marquer et des moyens d'inscription, dans ledit champ d'adaptation, d'au moins une information de marquage de ladite composante.

11. Produit programme d'ordinateur (42) téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé de marquage selon l'une quelconque des revendications 1 à 8.

12. Procédé de réception d'un signal multiplexé organisé en paquets de transport (10-14) successifs et véhiculant une pluralité de services comprenant chacun au moins une composante, chacune desdites composantes étant identifiée au niveau desdits paquets de transport par un identifiant de paquet (PID),
au moins une desdites composantes dudit signal ayant été marquée selon le procédé de marquage de l'une quelconque des revendications 1 à 8,
**caractérisé en ce qu'**il comprend :
- une étape de recherche (50) d'au moins un paquet de marquage dans ledit signal multiplexé reçu ;
- en cas de détection d'au moins un paquet de marquage :
- une étape d'extraction (51) d'au moins une information de marquage (I) dudit paquet détecté ;
- une étape d'association (52) de ladite au moins une information de marquage (I) à une desdites composantes (C) dudit signal multiplexé, appelée composante marquée, en fonction dudit identifiant de paquet dudit paquet de marquage ;
- une étape de vérification (53), en fonction de ladite information de marquage (I), de l'affectation correcte de ladite composante marquée à l'un desdits services qui la référence;
- en l'absence de détection d'au moins un paquet de marquage après un intervalle de temps prédéterminé, une étape d'émission (55) d'une alerte d'absence de marquage.

## Claims

1. Method of marking at least one component of a multiplexed signal which is organised in successive transport packets (10 - 14) and carries a plurality of services, each comprising at least one component, each of said components being identified at the level of said transport packets (10 - 14) by a packet identifier (PID),
each of said transport packets comprising a header (20) and a data field (21),
**characterized in that** it comprises a step of inserting into said multiplexed signal at least one specific transport packet, called a marking packet, the data field (21) of which is empty, including a specific field, called an adaptation field, in said header (20) of said packet,
and **in that** said marking packet has the same packet identifier (PID) as said component to be marked, and transports, in said adaptation field, at least one item of marking information of said component.

2. Method of marking according to Claim 1, **characterized in that** said marking packet replaces a padding packet (14) of said multiplexed signal.

3. Method of marking according to any one of Claims 1 and 2, **characterized in that** said marking information of said component is given in said adaptation field of said marking packet by a private descriptor.

4. Method of marking according to any one of Claims 1 to 3, **characterized in that** said multiplexed signal is of MPEG-TS type.

5. Method of marking according to any one of Claims 1 to 4, **characterized in that** said insertion step is implemented before a step of broadcasting said multiplexed signal to at least one receiving terminal.

6. Method of marking according to any one of Claims 1 to 5, **characterized in that** at least two marking packets, each associated with a distinct component, are inserted into said multiplexed signal, in such a way as to mark at least two components.

7. Method of marking according to any one of Claims 1 to 6, **characterized in that** whereas a service comprises at least two components, the marking of only one of said components of said services is implemented, by inserting a marking packet into said multiplexed signal,.

8. Method of marking according to any one of Claims 1 to 7, **characterized in that** said step of inserting a marking packet into said multiplexed signal is implemented at regular time intervals of duration approximately equal to 30 s.

9. Multiplexed signal which is organised in successive transport packets (10 - 14) and carries a plurality of services, each comprising at least one component, each of said components being identified at the level of said transport packets (10 - 14) by a packet identifier (PID),
each of said transport packets comprising a header (20) and a data field (21),
**characterized in that** it also comprises at least one specific transport packet, called a marking packet, the data field (21) of which is empty, including a specific field, called an adaptation field, in said header (20) of said packet,
and **in that** said marking packet has the same packet identifier (PID) as one of said components of said signal, and transports, in said adaptation field, at least one item of marking information of said component.

10. Equipment for marking at least one component of a multiplexed signal which is organised in successive transport packets (10 - 14) and carries a plurality of services, each comprising at least one component, each of said components being identified at the level of said transport packets by a packet identifier (PID),
each of said transport packets comprising a header (20) and a data field (21),
**characterized in that** it comprises means (344) of inserting into said multiplexed signal at least one specific transport packet, called a marking packet, the data field (21) of which is empty, including a specific field, called an adaptation field, in said header (20) of said packet, means (331, 36) of assigning, to said marking packet, the same packet identifier as said component to be marked, and means of entering, into said adaptation field, at least one item of marking information of said component.

11. Computer program product (42) which is downloadable from a communication network and/or stored on a computer-readable medium and/or executable by a microprocessor, **characterized in that** it comprises program code instructions for implementing the steps of the method of marking according to any one of Claims 1 to 8.

12. Method of receiving a multiplexed signal which is organised in successive transport packets (10 - 14) and carries a plurality of services, each comprising at least one component, each of said components being identified at the level of said transport packets by a packet identifier (PID),
at least one of said components of said signal having been marked according to the method of marking of any one of Claims 1 to 8,
**characterized in that** it comprises:
- a step (50) of searching for at least one marking packet in said received multiplexed signal;
- in the case of detecting at least one marking packet:
- a step (51) of extracting at least one item of marking information (I) from said detected packet;
- a step (52) of associating said at least one item of marking information (I) with one of said components (C) of said multiplexed signal, called a marked component, according to said packet identifier of said marking packet;
- a step (53) of verifying, according to said item of marking information (I), the correct assignment of said marked component to one of said services which references it;
- in the absence of detection of at least one marking packet after a predetermined time interval, a step (55) of emitting an absence of marking alarm.

## Patentansprüche

1. Verfahren zum Kennzeichnen mindestens einer Komponente eines Multiplexsignals, das aus aufeinanderfolgenden Übertragungspaketen (10 bis 14) aufgebaut ist und mehrere Dienste transportiert, die jeweils mindestens eine Komponente umfassen,
wobei jede der Komponenten auf der Ebene der Übertragungspakete (10 bis 14) durch eine Paketkennung (PID) identifiziert ist,
wobei jedes der Übertragungspakete einen Kopf (20) und ein Datenfeld (21) umfasst,
**dadurch gekennzeichnet, dass** es einen Schritt zum Einfügen von mindestens einem besonderen Übertragungspaket, dessen Datenfeld (21) leer ist, das Kennzeichnungspaket genannt wird und im Kopf des Pakets (20) ein besonderes Feld umfasst, das Anpassungsfeld genannt wird, in das Multiplexsignal umfasst,
und **dadurch**, dass das Kennzeichnungspaket die gleiche Paketkennung (PID) wie die zu kennzeichnende Komponente aufweist und im Anpassungsfeld mindestens eine Information zur Kennzeichnung der Komponente überträgt.

2. Kennzeichnungsverfahren nach Anspruch 1, **dadurch gekennzeichnet, dass** das Kennzeichnungspaket ein Füllpaket (14) des Multiplexsignals ersetzt.

3. Kennzeichnungsverfahren nach einem der Ansprüche 1 und 2, **dadurch gekennzeichnet, dass** die Kennzeichnungsinformation der Komponente durch einen privaten Deskriptor im Anpassungsfeld des Kennzeichnungspakets angegeben wird.

4. Kennzeichnungsverfahren nach einem der Ansprüche 1 bis 3, **dadurch gekennzeichnet, dass** das Multiplexsignal vom Typ MPEG-TS ist.

5. Kennzeichnungsverfahren nach einem der Ansprüche 1 bis 4, **dadurch gekennzeichnet, dass** der Einfügungsschritt vor einem Schritt des Sendens des Multiplexsignals zu mindestens einem Empfangsendgerät ausgeführt wird.

6. Kennzeichnungsverfahren nach einem der Ansprüche 1 bis 5, **dadurch gekennzeichnet, dass** mindestens zwei Kennzeichnungspakete eingefügt werden, die jeweils derart mit einer unterschiedlichen Komponente im Multiplexsignal verbunden sind, dass die Kennzeichnung von mindestens zwei Komponenten ausgeführt wird.

7. Kennzeichnungsverfahren nach einem der Ansprüche 1 bis 6, **dadurch gekennzeichnet, dass** bei einem Dienst, der mindestens zwei Komponenten umfasst, das Kennzeichnen durch Einfügen eines Kennzeichnungspakets in das Multiplexsignal bei lediglich einer der Komponenten des Dienstes ausgeführt wird.

8. Kennzeichnungsverfahren nach einem der Ansprüche 1 bis 7, **dadurch gekennzeichnet, dass** der Schritt des Einfügens eines Kennzeichnungspakets in das Multiplexsignal in regelmäßigen Zeitintervallen von einer Dauer ausgeführt wird, die im Wesentlichen gleich 30 s ist.

9. Multiplexsignal, das aus aufeinanderfolgenden Übertragungspaketen (10 bis 14) aufgebaut ist und mehrere Dienste transportiert, die jeweils mindestens eine Komponente umfassen, wobei jede der Komponenten auf der Ebene der Übertragungspakete (10 bis 14) durch eine Paketkennung (PID) identifiziert ist, wobei jedes der Übertragungspakete einen Kopf (20) und ein Datenfeld (21) umfasst,
**dadurch gekennzeichnet, dass** es auch mindestens ein besonderes Übertragungspaket umfasst, dessen Datenfeld (21) leer ist, das Kennzeichnungspaket genannt wird und im Kopf (20) des Pakets ein besonderes Feld umfasst, das Anpassungsfeld genannt wird,
und **dadurch**, dass das Kennzeichnungspaket die gleiche Paketkennung (PID) wie eine der Komponenten des Signals umfasst und in dem Anpassungsfeld mindestens eine Information zur Kennzeichnung der Komponente überträgt.

10. Ausrüstung zur Kennzeichnung mindestens einer Komponente eines Multiplexsignals, das aus aufeinanderfolgenden Übertragungspaketen (10 bis 14) aufgebaut ist und mehrere Dienste transportiert, die jeweils mindestens eine Komponente umfassen,
wobei jede der Komponenten auf der Ebene der Übertragungspakete durch eine Paketkennung (PID) identifiziert ist,
wobei jedes der Übertragungspakete einen Kopf (20) und ein Datenfeld (21) umfasst,
**dadurch gekennzeichnet, dass** sie Mittel (344) zum Einfügen mindestens eines besonderen Übertragungspakets, dessen Datenfeld (21) leer ist und das Kennzeichnungspaket genannt wird, das in dem Kopf (20) des Pakets ein besonderes Feld umfasst, das Anpassungsfeld genannt wird, in das Multiplexsignal, Mittel (331, 36) zum Zuordnen der gleichen Paketkennung wie diejenige der zu kennzeichnenden Komponente zum Kennzeichnungspaket, und Mittel zum Eintragen von mindestens einer Information zur Kennzeichnung der Komponente in das Anpassungsfeld umfasst.

11. Computerprogrammprodukt (42), das von einem Kommunikationsnetz herunterladbar und/oder auf einem maschinenlesbaren Träger gespeichert und/oder auf einem Mikroprozessor ausführbar ist, **dadurch gekennzeichnet, dass** es Programmcodeanweisungen zur Ausführung der Schritte des Kennzeichnungsverfahrens nach einem der Ansprüche 1 bis 8 umfasst.

12. Verfahren zum Empfangen eines Multiplexsignals, das aus aufeinanderfolgenden Übertragungspaketen (10 bis 14) aufgebaut ist und mehrere Dienste transportiert, die jeweils mindestens eine Komponente umfassen, wobei jede der Komponenten auf der Ebene der Übertragungspakete durch eine Paketkennung (PID) identifiziert ist,
wobei mindestens eine der Komponenten des Signals nach dem Kennzeichnungsverfahren nach einem der Ansprüche 1 bis 8 **gekennzeichnet** wurde,
**dadurch gekennzeichnet, dass** es Folgendes umfasst:
- einen Schritt des Suchens (50) von mindestens einem Kennzeichnungspaket im empfangenen Multiplexsignal;
- im Falle eines Erkennens von mindestens einem Kennzeichnungspaket:
- einen Schritt des Gewinnens (51) mindestens einer Kennzeichnungsinformation (I) des erkannten Pakets;
- einen Schritt des Verbindens (52) der mindestens einen Kennzeichnungsinformation (I) mit einer der Komponenten (C) des Multiplexsignals, die **gekennzeichnet**e Komponente genannt wird, in Abhängigkeit von der Paketkennung des Kennzeichnungspakets;
- einen Schritt der Überprüfung (53) der richtigen Zuordnung der **gekennzeichnet**en Komponente zu einem der Dienste, für den das Kennzeichen gesetzt wurde, in Abhängigkeit von der Kennzeichnungsinformation (I),
- bei Nichterkennung von mindestens einem Kennzeichnungspaket nach einem vorbestimmten Zeitintervall einen Schritt des Ausgebens (55) eines Alarms für das Nichtvorhandensein einer Kennzeichnung.
